# FASCICULE DE BREVET EUROPEEN

(11) **EP 1 392 535 B1**
(45) Date de publication et mention de la délivrance du brevet: **05.09.2007**
(21) Numéro de dépôt: 02735734.2
(22) Date de dépôt: 06.06.2002
(51) Int. Cl.: B60H 1/00

(54) **DISPOSITIF DE COMMANDE MECANIQUE DES ELEMENTS DE L'EQUIPEMENT DE VENTILATION D'UN VEHICULE**
VORRICHTUNG ZUR MECHANISCHEN BETÄTIGUNG VON ELEMENTEN FÜR DIE BELÜFTUNG EINES FAHRZEUGS
DEVICE FOR MECHANICAL CONTROL OF ELEMENTS OF A MOTOR VEHICLE VENTILATING EQUIPMENT

(30) Priorité: 07.06.2001 DE 10127650
(43) Date de publication de la demande: 03.03.2004
(73) Titulaire: Valeo Klimasysteme GmbH, 96476 Rodach (DE)
(72) Inventeur: GRIMKE, Dirk, 29399 Wahrenholz (DE)
(74) Mandataire: Léveillé, Christophe
(86) Numéro de dépôt international: PCT/IB2002/002086
(87) Numéro de publication internationale: WO 2002/098688

(56) Documents cités:
- EP-A- 0 884 204
- DE-A- 19 643 233
- DE-U- 9 005 778
- FR-A- 2 806 041

## Description

La présente invention concerne un dispositif de commande mécanique des éléments de l'équipement de ventilation d'un véhicule tels qu'il est décrit par le préambule de la revendication 1 et montré par le document EP 0 84204.

On connaît des appareillages ou des installations de ventilation de l'habitacle des véhicules qui comprennent un boîtier dans lequel est disposée une pluralité de conduits de ventilation pouvant être ouverts et fermés à l'aide de clapets d'aération. Un mécanisme est ici prévu pour ouvrir et fermer ces clapets d'aération, lequel comprend au moins un dispositif de commande comprenant une pluralité de surfaces, ces surfaces elles-mêmes pouvant ici faire office de chemins de came ou alors les chemins de came correspondants, dans lesquels sont guidés les éléments d'engrènement correspondants pour commander les clapets d'aération, étant façonnés dans la surface.

Un dispositif de ce type est connu, par exemple, du document FR 0003048.

Les dispositifs mentionnés ci-dessus de commande mécanique des éléments des équipements de ventilation des véhicules sont des produits complexes dont la fabrication est compliquée et coûteuse, notamment en raison de la pluralité de chemins de came différents généralement présents pour commander les différents éléments.

Par conséquent, l'objet de la présente invention est de prévoir un dispositif générique de commande mécanique des éléments de l'équipement de ventilation d'un véhicule qui est le plus simple et le plus économique à fabriquer tout en offrant le même niveau de fonctionnalité et de complexité.

Cet objet est réalisé par les caractéristiques de la revendication indépendante 1, des formes de réalisation judicieuses étant décrites par les revendications secondaires.

Il est ici prévu un dispositif de commande mécanique des éléments de l'équipement de ventilation d'un véhicule comprenant au moins une surface circulaire autour d'un axe de rotation du dispositif et dans laquelle est façonné au moins un chemin de came pour l'engagement mobile d'un élément de commande, le dispositif étant, d'après les indications de la présente invention, composé au moins de deux pièces distinctes assemblées, la ligne de séparation extérieure entre les deux pièces étant disposée dans la zone du fond de l'au moins un chemin de came.

Ce dispositif est avantageusement configuré de manière à ce que les deux pièces du dispositif sont reliées entre elles par une liaison enfichable, la liaison étant encore de préférence réalisée sous la forme d'une rainure et d'une languette. Cette liaison enfichable à rainure et languette peut en outre être configurée de manière à ce que la languette forme le fond de l'au moins un chemin de came qui est prévu dans la surface circulaire autour de l'axe de rotation du dispositif.

Les flancs latéraux et le fond de l'au moins un, plus précisément chaque chemin de came forment de préférence à chaque fois un angle droit, les deux flancs de l'au moins un, plus précisément chaque chemin de came étant aussi de préférence parallèle à l'autre. Cela permet d'obtenir un perfectionnement du guidage dans le chemin de came à la manière d'une commande desmodromique.

D'après les indications de la présente invention, chacune des pièces du dispositif est, encore de préférence, réalisée par la technique du moulage par injection en utilisant de préférence une matière plastique.

Les surfaces circulaires autour de l'axe de rotation du dispositif peuvent être cylindriques, coniques ou bombées ou présenter toute autre forme appropriée.

Pour terminer, le dispositif présente en plus du chemin de came sur la surface circulaire, aussi de préférence, à chaque fois au moins un chemin de came sur un, notamment sur chacun de ses côtés frontaux. Le chemin de came de l'un des côtés frontaux peut ici entièrement être façonné dans l'une des pièces du dispositif et le chemin de came de l'autre côté frontal entièrement dans l'autre pièce du dispositif.

En configurant le dispositif conformément aux indications de la présente invention, il devient possible, malgré la complexité éventuelle qui résulte du façonnage des chemins de came dans les surfaces circulaires autour des axes de rotation des dispositifs de commande génériques, d'obtenir une fabrication simple et ainsi économique. En disposant la ligne de séparation entre les deux pièces séparées qui composent le dispositif dans la zone à partir du chemin de came façonné dans la surface, chacune des pièces peut être fabriquée avec un moule relativement simple, dans la mesure où la technique employée est celle du moulage par injection, car cela permet d'éviter les contre-dépouilles à l'intérieur d'un moule pour injection et, de ce fait, également les pièces de moule mobiles.

D'autres propriétés et avantages résultent de la description suivante de formes de réalisation préférentielles de la présente invention en se référant aux dessins joints qui illustrent :
- Figure 1: la représentation schématique tridimensionnelle de l'une des pièces formant un dispositif générique ;
- Figure 2: le pendant de la pièce selon la figure 1 ;
- Figure 3: la représentation schématique tridimensionnelle de l'une des pièces formant un dispositif générique dans une deuxième forme de réalisation ;
- Figure 4: le pendant de la pièce selon la figure 3 ;
- Figure 5: la portion d'un mécanisme central de l'équipement de ventilation d'un véhicule.

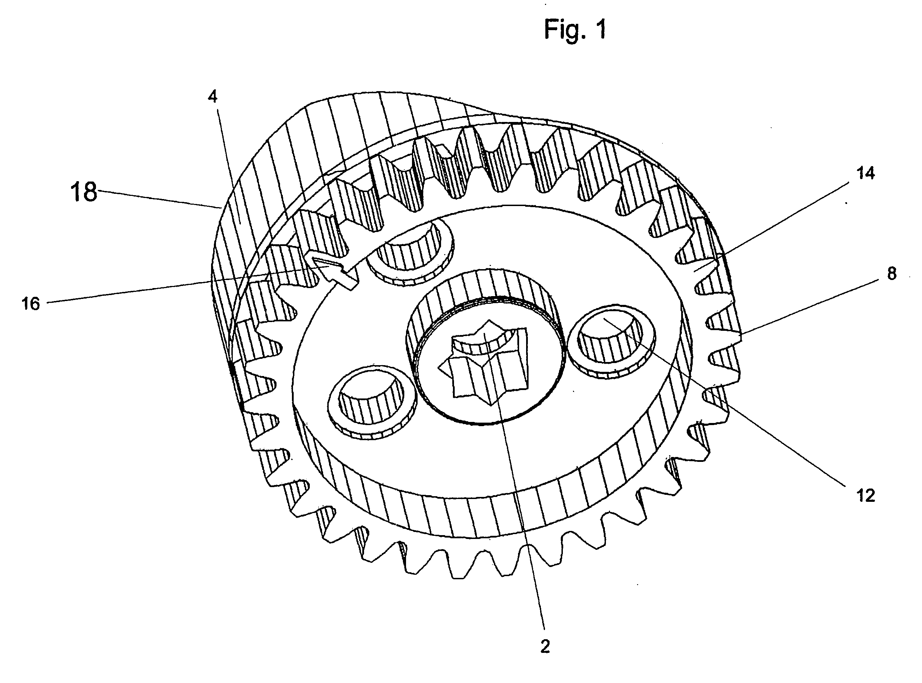

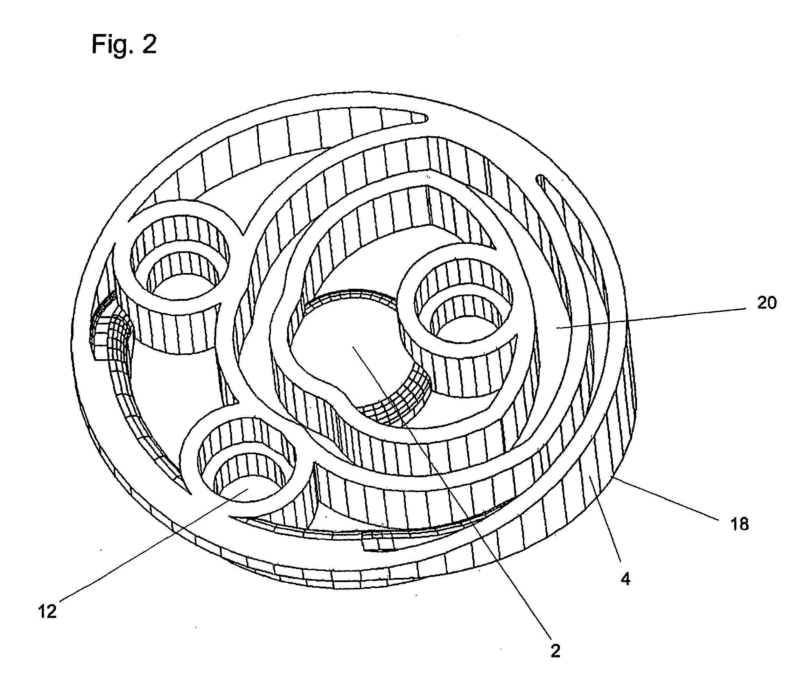

La figure 1 représente une pièce d'un dispositif générique de commande des éléments de l'équipement de ventilation d'un véhicule. Le pendant correspondant à la pièce représentée dans la figure 1 peut se trouver dans la figure 2.

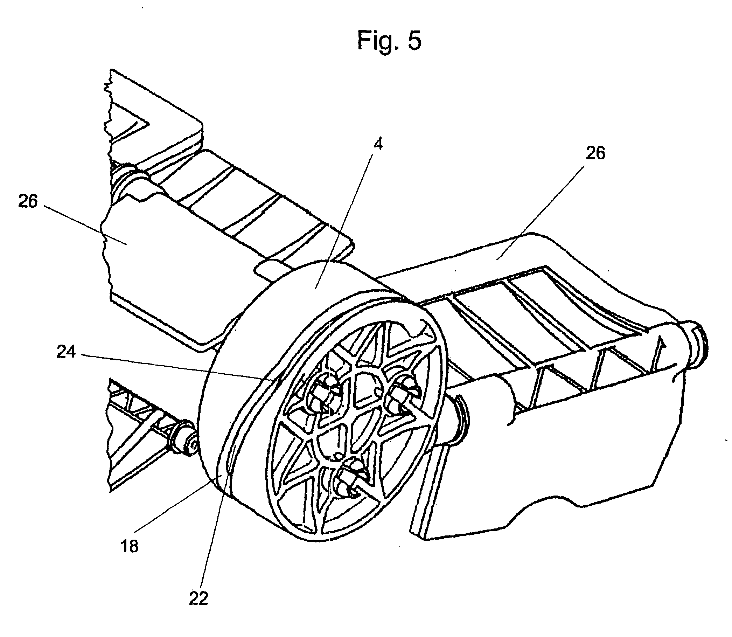

Les pièces représentées dans les figures 1 et 2 sont des pièces moulées par injection fabriquées en matière plastique. Les pièces séparées qui se retrouvent dans les figures 1 et 2 forment, lorsqu'elles sont assemblées, un cylindre de commande avec une surface extérieure 4 cylindrique circulaire autour de l'axe de rotation 2, comme le montre la figure 5. La pièce représentée dans la figure 1 de l'élément de commande cylindrique est ici munie en son bord avant d'une couronne dentée 8 qui sert à l'engagement avec un élément d'entraînement (non illustré).

Comme le montre également la figure 1, la zone centrale de la pièce représentée dans la figure 1 est constituée d'une surface intérieure 10 dans laquelle sont façonnées des ouvertures 12 pour enclipser des axes d'autres éléments de l'équipement de ventilation.

Comme le montre encore la figure 1, une flèche d'indexation 16 est prévue sur la face avant 14 de la couronne dentée 8, laquelle permet un alignement correct des pièces à assembler avec la pièce représentée dans la figure 1.

Comme le montrent la figure 1 ainsi que la figure 2, les surfaces circulaires 4 respectives des pièces sont délimitées par un bord 18 en direction de l'autre partie opposée correspondante, lequel est configuré de manière complémentaire l'un par rapport à l'autre sur les pièces représentées dans les figures 1 et 2. Les surfaces 4 sont en outre dimensionnées de telle manière que lorsque les pièces des figures 1 et 2 sont assemblées, les bords forment un chemin de came dans lequel peut s'engager l'élément de commande correspondant qui est alors déplacé lors d'une rotation du dispositif formé par les pièces des figures 1 et 2 en fonction du tracé des bords 18 ou du chemin de came formé par ceux-ci.

Du fait que la ligne de séparation 24 entre les pièces représentées dans les figures 1 et 2 se situe dans la zone du chemin de came mentionné précédemment, les pièces correspondantes peuvent être réalisées très facilement du point de vue de la technique de moulage, car les pièces respectives présentent peu de contre-dépouilles posant problème. Les pièces représentées dans les figures 1 et 2 sont tout simplement emboîtées ensemble pour former le dispositif complet de commande des éléments de l'équipement de ventilation d'un véhicule, une liaison enfichable à rainure et languette étant prévue dans la forme de réalisation représentée avec laquelle la languette 22 de l'une des pièces forme le fond du chemin de came formé par les bords 18.

Comme le montre en outre la figure 2, un chemin de came 20 supplémentaire destiné à recevoir un élément de commande supplémentaire est également prévu dans la face avant de la pièce représentée dans la figure 2.

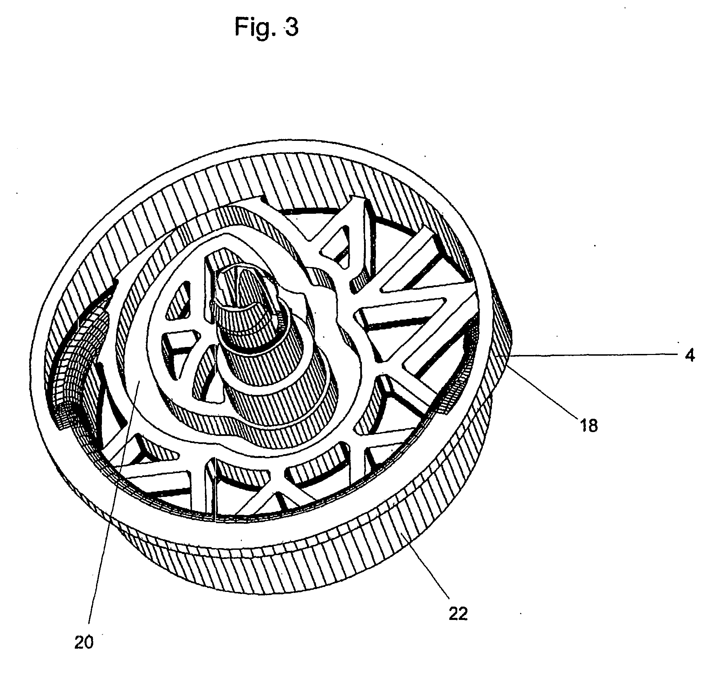

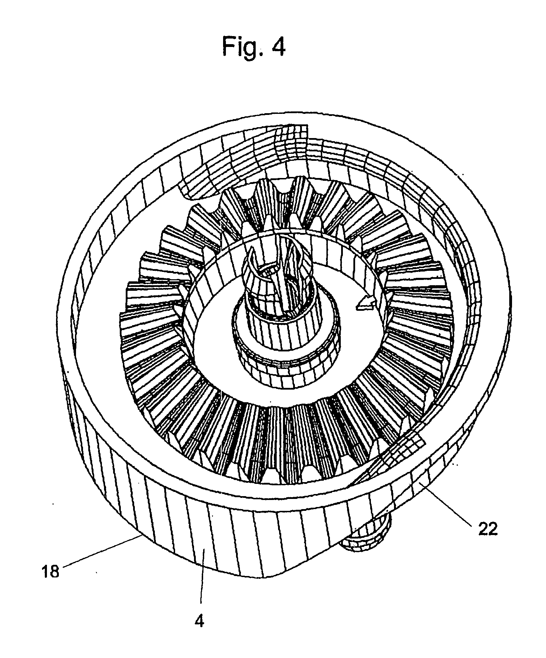

Les figures 3 et 4 représentent chacune des formes de réalisation supplémentaires des pièces séparées qui, lorsqu'elles sont assemblées, constituent un dispositif de commande mécanique des éléments de l'équipement de ventilation d'un véhicule. Les éléments correspondants sont ici identifiés par les mêmes caractères de référence que dans les figures 1 et 2, notamment la surface circulaire 4 ainsi que le bord 18 qui la délimite.

La figure 5 représente finalement une portion d'un mécanisme de commande central de l'équipement de ventilation d'un véhicule muni d'un cylindre de commande mécanique tel qu'il est composé des pièces des figures 1 et 2 ou des figures 3 et 4. Les surfaces extérieures 4 cylindriques circulaires autour de l'axe de rotation 2 et dans lesquelles est façonné un chemin de came délimité par les bords 18 sont ici clairement reconnaissables. Le fond 22 du chemin de came est ici formé par la languette 22 d'une liaison enfichable à rainure et languette à l'aide de laquelle sont assemblées les pièces respectives telles qu'elles apparaissent, par exemple, dans les figures 1 et 2 ou 3 et 4. Comme le montre également la figure 5, la ligne de séparation extérieure 24 entre les pièces séparées assemblées par une liaison à rainure et languette du dispositif de commande mécanique des éléments de l'équipement de ventilation d'un véhicule passent dans la zone délimitée par les bords 18 et la languette 22 de la liaison à rainure et languette. Il en résulte également que dans les différentes zones du chemin de came la rainure ou la languette de la liaison à rainure et languette est à chaque fois prévue en partie sur le côté de l'une des pièces individuelles et dans d'autres zones sur le côté de l'autre pièce individuelle desquelles est composé le cylindre de commande.

Différents clapets d'aération 26 sont en outre représentés dans la figure 5, dont la position est déterminée par le cylindre de commande muni de la surface circulaire 4.

## Revendications

1. Dispositif de commande mécanique des éléments (26) de l'équipement de ventilation d'un véhicule comprenant au moins une surface (4) circulaire autour d'un axe de rotation (2) du dispositif et dans laquelle est façonné au moins un chemin de came (18,22) pour l'engagement mobile d'un élément de commande, le dispositif est composé au moins de deux pièces distinctes assemblées, la ligne de séparation extérieure (24) entre les deux pièces étant disposée dans la zone du fond de l'au moins un chemin de came, **caractérisé en ce qu'**en plus du chemin de came sur la surface circulaire, il est à chaque fois prévu au moins un chemin de came sur un, notamment sur chacun de ses côtés frontaux.

2. Dispositif selon la revendication 1, **caractérisé en ce que** les deux pièces du dispositif sont reliées entre elles par une liaison enfichable.

3. Dispositif selon la revendication 2, **caractérisé en ce que** la liaison est réalisée sous la forme d'une rainure et d'une languette.

4. Dispositif selon la revendication 3, **caractérisé en ce que** liaison enfichable à rainure et languette est configurée de manière à ce que la languette (22) forme le fond de l'au moins un chemin de came.

5. Dispositif selon l'une des revendications précédentes, **caractérisé en ce que** les pièces du dispositif sont réalisées par la technique du moulage par injection.

6. Dispositif selon l'une des revendications précédentes, **caractérisé en ce que** les pièces du dispositif sont fabriquées en matière plastique.

7. Dispositif selon l'une des revendications précédentes, **caractérisé en ce que** la surface circulaire du dispositif est cylindrique.

8. Dispositif selon l'une des revendications 1 à 6, **caractérisé en ce que** la surface circulaire du dispositif est conique.

9. Dispositif selon l'une des revendications 1 à 6, **caractérisé en ce que** la surface circulaire du dispositif est à profil bombé.

10. Dispositif selon l'une quelconque des revendications précédentes, **caractérisé en ce que** le chemin de came de l'un des côtés frontaux est ici entièrement façonné dans l'une des pièces individuelles du dispositif et/ou le chemin de came de l'autre côté frontal entièrement dans l'autre pièce individuelle du dispositif.

11. Dispositif selon l'une des revendications précédentes, **caractérisé en ce que** les flancs latéraux et le fond de l'au moins un, plus précisément chaque chemin de came forment à chaque fois un angle droit.

12. Dispositif selon l'une des revendications précédentes, **caractérisé en ce que** les deux flancs de l'au moins un, plus précisément chaque chemin de came sont parallèles l'un par rapport à l'autre.

## Claims

1. Mechanical control device of the components (26) of the ventilation equipment of a vehicle comprising.at least one circular surface (4) around an axis of rotation (2) of the device and wherein at least one cam track (18, 22) is formed for the mobile engagement of a control element, the device consists of at least two separate assembled parts, the external separating line (24) between the two parts being arranged in the area of the rear of the at least one cam track, **characterised in that**, in addition to the cam track on the circular surface, each time, at least one cam track is provided on one, particularly on each of its front sides.

2. Device according to claim 1, **characterised in that** both parts of the devices are connected to each other by a plug-in connection.

3. Device according to claim 2, **characterised in that** the connection is produced in the form of a groove and a tongue.

4. Device according to claim 3, **characterised in that** the groove and tongue plug-in connection is configured so that the tongue (22) forms the rear of the at least one cam track.

5. Device according to any of the above claims, **characterised in that** the parts of the device are produced by means of the injection moulding technique.

6. Device according to any of the above claims, **characterised in that** the parts of the device are made of plastic.

7. Device according to any of the above claims, **characterised in that** the circular surface of the device is cylindrical.

8. Device according to any of claims 1 to 6, **characterised in that** the circular surface of the device is conical.

9. Device according to any of claims 1 to 6, **characterised in that** the circular surface of the device has a convex profile.

10. Device according to any of the above claims, **characterised in that** the cam track of one of the front sides is in this case entirely formed in one of the individual parts of the device and/or the cam track on the other front side entirely in the other individual part of the device.

11. Device according to any of the above claims, **characterised in that** the side flanks and the rear of the at least one, more specifically each, cam track form a right angle each time.

12. Device according to any of the above claims, **characterised in that** both flanks of the at least one, more specifically each, cam track are parallel with respect to each other.

## Patentansprüche

1. Mechanische Steuereinrichtung für die Elemente (26) der Belüftungsausstattung eines Fahrzeuges, umfassend zumindest eine kreisförmig um eine Rotationsachse (2) der Einrichtung verlaufende Fläche (4), auf der zumindest eine Nockenbahn (18, 22) für den beweglichen Eingriff eines Steuerelements ausgebildet ist; die Einrichtung besteht zumindest aus zwei verschiedenen, zusammengefügten Teilen, wobei die äußere Trennungslinie (24) zwischen den beiden Teilen im Grundbereich von zumindest einer Nockenbahn angeordnet ist, **dadurch gekennzeichnet, dass** zusätzlich zur Nockenbahn auf der kreisförmig verlaufenden Fläche jeweils zumindest eine Nockenbahn auf einer und insbesondere auf jeder ihrer Frontseiten vorgesehen ist.

2. Einrichtung nach Anspruch 1, **dadurch gekennzeichnet, dass** die beiden Teile der Einrichtung mittels einer Steckverbindung miteinander verbunden sind.

3. Einrichtung nach Anspruch 2, **dadurch gekennzeichnet, dass** die Verbindung in Form einer Rille und einer Leiste ausgeführt ist.

4. Einrichtung nach Anspruch 3, **dadurch gekennzeichnet, dass** die Steckverbindung mittels Rille und Leiste so konfiguriert ist, dass die Leiste (22) den Grund von zumindest einer Nockenbahn bildet.

5. Einrichtung nach einem der vorhergehenden Ansprüche, **dadurch gekennzeichnet, dass** die Teile der Einrichtung mithilfe der Technik des Spritzgießens erzeugt werden.

6. Einrichtung nach einem der vorhergehenden Ansprüche, **dadurch gekennzeichnet, dass** die Teile der Einrichtung aus Kunststoff hergestellt werden.

7. Einrichtung nach einem der vorhergehenden Ansprüche, **dadurch gekennzeichnet, dass** die kreisförmig verlaufende Fläche der Einrichtung zylindrisch ist.

8. Einrichtung nach einem der Ansprüche 1 bis 6, **dadurch gekennzeichnet, dass** die kreisförmig verlaufende Fläche der Einrichtung konisch ist.

9. Einrichtung nach einem der Ansprüche 1 bis 6, **dadurch gekennzeichnet, dass** die kreisförmig verlaufende Fläche der Einrichtung ein gewölbtes Profil besitzt.

10. Einrichtung nach einem der vorhergehenden Ansprüche, **dadurch gekennzeichnet, dass** die Nockenbahn einer der Frontseiten hier vollständig auf einem der Einzelteile der Einrichtung und/oder die Nockenbahn der anderen Frontseite vollständig auf dem anderen Einzelteil der Einrichtung ausgebildet ist.

11. Einrichtung nach einem der vorhergehenden Ansprüche, **dadurch gekennzeichnet, dass** die seitlichen Flächen und der Grund von zumindest einer und genauer gesagt von jeder Nockenbahn jeweils einen rechten Winkel bilden.

12. Einrichtung nach einem der vorhergehenden Ansprüche, **dadurch gekennzeichnet, dass** die beiden seitlichen Flächen von zumindest einer und genauer gesagt von jeder Nockenbahn jeweils parallel zueinander stehen.
